**Europäisches Patentamt**

**European Patent Office**

**Office européen des brevets**

(11) Veröffentlichungsnummer: **0 229 979 B1**

(12) **EUROPÄISCHE PATENTSCHRIFT**

(45) Veröffentlichungstag der Patentschrift: **21.08.91**

(51) Int. Cl.5: **A21D 8/04**

(21) Anmeldenummer: **86117209.6**

(22) Anmeldetag: **10.12.86**

(54) **Verfahren zum enzymatischen Abbau von Restbrot und Verwendung des erhaltenen Abbauprodukts.**

(30) Priorität: **20.01.86 DE 3601479**

(43) Veröffentlichungstag der Anmeldung:
**29.07.87 Patentblatt 87/31**

(45) Bekanntmachung des Hinweises auf die
Patenterteilung:
**21.08.91 Patentblatt 91/34**

(84) Benannte Vertragsstaaten:
**AT BE CH DE ES FR GB GR IT LI LU NL SE**

(56) Entgegenhaltungen:
**EP-A- 0 154 135**
**DE-A- 2 448 715**
**US-A- 4 282 319**

**CHEMICAL ABSTRACTS, Band 88, 1978, Seite 381, Zusammenfassung Nr. 36137f, Columbus, Ohio, US.**

(73) Patentinhaber: **B. Wendeln jr. GmbH**
**Auf'm Halskamp 11**
**W-4594 Garrel Oldenburg(DE)**

(72) Erfinder: **Die Erfinder haben auf ihre Nennung verzichtet**

(74) Vertreter: **UEXKÜLL & STOLBERG Patentanwälte**
**Beselerstrasse 4**
**W-2000 Hamburg 52(DE)**

**Beschreibung**

Die Erfindung betrifft ein Verfahren zum enzymatischen Abbau von Restbrot mit Hilfe von alpha-Amylase(n), Proteasen sowie gegebenenfalls Amyloglucosidase(n) sowie die Verwendung des erhaltenen Abbauproduktes. Das Verfahren ist dadurch gekennzeichnet, daß man als Protease eine saure Protease, gewonnen aus der Fermentation von Weizenkeimen durch Vertreter der Rhizopus-Gruppe, verwendet.

In der Backwarenindustrie fallen durch Bruch, Fehlformung und andere technisch unvermeidbare Vorgänge Restmaterialien an, die bisher keine ihrem hohen Materialwert entsprechende Verwendung gefunden haben. Fabrikationszweige mit besonders hohem Anteil in Restmaterial sind die Keks- und Waffelherstellung sowie die Herstellung von Knäckebrot. Daneben fallen in der Brotindustrie mit Ausschußbrot und Abfällen der Schnittbrotbereitung sowie hei Betrieben zur Herstellung von Frühstückscerealien und Biskuits große Mengen Restmaterial an. Alle diese Restmaterialien werden im folgenden unter dem Begriff "Restbrot" zusammengefaßt, wobei dieser Begriff hauptsächlich Brot und Kleingebäck umfaßt. Beispiele für Restmaterialien, die unter den Begriff "Restbrot" fallen, sind u.a. Mehlbrote, Vollkornbrote und Brötchen. Auch Altbrot soll von dem Begriff "Restbrot" mit umfaßt werden, es sei denn, daß sich seine Verwendung durch Veränderungen während der Alterung aus ernährungsphysiologischen Gründen verbietet. Selbstverständlich kann auch frisches Brot erfindungsgemäß eingesetzt werden, so daß auch dies im Rahmen der Erfindung unter den Begriff "Restbrot" fallen soll.

Um das Restbrot, das bisher im wesentlichen nur zur Verfütterung an Vieh verwendet werden konnte, einer sinnvolleren und kostengünstigeren Verwertung zuzuführen, ist bereits vorgeschlagen worden, die im Restbrot vorhandene Stärke einem enzymatischen Abbau zu unterwerfen. Auf diese Weine können Süßungsmittel im Wage der enzymatischen "Direktverzuckerung" der vorhandenen Stärke gewonnen werden. Für den enzymatischen

Abbau des Stärkeanteils im Restbrot werden stärkeabbauende (amylolytische) Enzyme verwendet. Hierfür eignen sich alpha-Amylase(n). Besonders bevorzugt ist allerdings eine zweistufige Verfahrensweise, bei der zunächst alpha-Amylase zwecks Verflüssigung des stärkehaltigen Materials und dann für die möglichst vollständige Verzuckerung Amyloglucosidase eingesetzt werden. Im großen und ganzen entspricht der enzymatische Abbau des Stärkeanteils im Restbrot den seit langem bekannten Verfahren zum enzymatischen Abbau von Stärke als solcher (vgl. Getreide, Mehl und Brot, 37. Jahrgang, Hefte 1 und 8, 1983, Seiten 17 bis 20 und 251 bis 253 sowie EP-A-0 154 135).

Es ist ebenfalls bekannt, Proteine durch Hydrolyse abzubauen. Derartige Hydrolysate bilden u.a. die Grundlage für Speisewürzen, Brühen, Suppen und Soßen. Die zu ihrer Herstellung erforderliche Spaltung der Peptidbindungen der Proteine kann außer durch alkalische oder saure Hydrolyse auch durch enzymatische Hydrolyse erfolgen. Der Vorteil der enzymatischen Proteinhydrolyse liegt insbesondere in der hohen Spezifität und in der milden Spaltung von Proteinen, bei der keine Aminosäuren zerstört werden. Außerdem ist es inzwischen gelungen, die Bildung von bitter schmeckenden Peptiden, die die Anwendung der enzymatischen Proteinhydrolyse lange Zeit beeinträchtigt hat, weitestgehend zu unterdrücken, so daß die enzymatische Proteinhydrolyse eine äußerst vorteilhafte Möglichkeit des hydrolytischen Abbaus von Proteinen darstellt.

Im Zusammenhang mit dem enzymatischen Abbau von Stärke in trocken entkeimtem Mais ist schließlich bereits vorgeschlagen worden, die Stärke für den enzymatischen Angriff besser zugänglich zu machen, indem das im wesentlichen das Klebergefüge bildende und damit den enzymatischen Angriff auf die Stärke verhindernde Eiweiß vor dem enzymatischen Abbau der Stärke einem proteolytischen Abbau unterworfen wird, so daß das dadurch gelöste Protein zusammen mit der ohnehin notwendigen Extraktion der wasserlöslichen Bestandteile aus dem Mais entfernt werden kann (siehe DIE STÄRKE, 1968, Seiten 319 bis 323). Es ist allerdings zu beachten, daß dieser Vorschlag den enzymatischen Abbau von Stärke zwecks Herstellung von Dextrose betrifft, d.h. die durch die Einwirkung von Protease erzeugten Proteinabbauprodukte werden bereits vor der Einwirkung der die Stärke abbauenden Enzyme entfernt, so daß im Endprodukt keine Mischung von Stärke- und Proteinabbauprodukten vorhanden ist. Außerdem erfolgt die Einwirkung von Protease und alpha-Amylase bzw. Amyloglucosidase zeitlich nacheinander, d.h. Protease(n) und alpha-Amylase(n) bzw. Amyloglucosidase(n) wirken nicht gleichzeitig auf das abzubauende Material ein.

Aus der US-A-4 282 319 ist ein Verfahren bekannt, bei dem zur Herstellung von Getränken aus Getreide, letzteres mit Amylase, Amyloglucosidase und einer geringen Menge neutraler, thermoresistenter Protease abgebaut wird. Die Protease soll jedoch sehr zurückhaltend eingesetzt werden (0,5 g/3 l).

Schließlich wird in der JP-A-77117446 ein Verfahren beschrieben, mit Hilfe dessen Restbrot zu einem Sirup abgebaut werden soll. Zu diesem Zweck soll in erster Linie Melasse (mehr als 20%) sowie Zellulase (etwa 1%), saccharolytische Enzyme (etwa 1%) und "ein wenig" Protease eingesetzt werden. Nähere Angaben zur Natur der zu verwendenden Protease finden sich in dieser Veröffentlichung nicht.

Der vorliegenden Erfindung liegt nunmehr die Aufgabe zugrunde, die Verwertung von Restbrot weiter zu verbessern und das Restbrot zu noch attraktiveren Produkten zu verarbeiten, indem nicht nur die im Restbrot vorhandene Stärke, sondern auch das darin enthaltene Protein hydrolysiert wird, um auch das im Restbrot vorhandene Protein nutzbringend einzusetzen und den Nutzungswert des Restbrotes insgesamt zu erhöhen. Insbesondere soll ein Produkt geschaffen werden, das nicht nur als Süßungsmittel sondern vor allem als Geschmacks-Precursor dienen kann.

Gegenstand der Erfindung ist dementsprechend ein Verfahren zum enzymatischen Abbau von Restbrot der eingangs genannten Art, das dadurch gekennzeichnet ist, daß man das Restbrot gleichzeitig zur Amylolyse einer Proteolyse unter Verwendung von saurer(n) Protease(n) mit einem pH-Optimum bei 3,5 und bei einer Aktivität von 15.000 U/g, gewonnen aus der Fermentation von Weizenkeimen durch Vertreter der Rhizopus-Gruppe, in einer Menge von 1 bis 3 Gew.%, bezogen auf den Proteingehalt der Restbrot-Trockenmasse, verwendet und ein sowohl amylolytisch als auch proteolytisch abgebautes Produkt gewinnt, wobei in diesem Produkt die Proteine weitgehend zu freien Aminosäuren abgebaut sind.

Gegenstand der Erfindung die Verwendung des so gewonnenen Abbauprodukts bei der Herstellung von Back-, Fleisch- und Wurstwaren, Milch- und Käseprodukten sowie Futtermitteln und als Substrat für Fermentationen.

Bevorzugte Ausführungsformen der Erfindung ergeben sich aus dem abhängigen Anspruch und der folgenden Beschreibung.

Das erfindungsgemäße Verfahren erlaubt durch Anwendung milder Verfahrensbedingungen die Herstellung von wertvollen Aufarbeitungsprodukten aus Restbrot, die z.B. einen Teil des für süße Backwaren hohen Zuckeranteils ersetzen oder bestimmte Bräunungseffekte hervorrufen können. Der Vorteil des nach dem erfindungsgemäßen Verfahren gewonnenen Produkts besteht in dem hohen Anteil an reduzierendem Zucker und einem relativ hohen Anteil an freien Aminosäuren. Aufgrund seiner vorzüglichen Eigenschaften kann dieses Produkt, das im folgenden der Einfachheit halber als "Brotsirup" bezeichnet wird, als Süßungsmittel mit ausgeprägtem Brotgeschmack und -aroma verwendet werden. Darüber hinaus ist dieses Produkt aber auch und vor allem als Geschmacksprecursor anzusehen, da die vorliegende hohe Konzentration und spezifische Komposition der funktionellen Gruppen (reduzierende Zucker und freie $NH_2$-Gruppen) unter Wärmeeinwirkung (Backen, Extrudieren etc.) im Sinne von Maillard zu reagieren vermag. Konzentration und Komposition der Vorläufersubstanzen ergeben dabei das typische Geschmacks- und Aromaprofil. Damit eignet sich das erfindungsgemäß hergestellte Produkt zur Herstellung, Optimierung und Verbesserung verschiedenster Lebensmittel aber auch von Fermentationsprodukten. So kann der erfindungsgemäß hergestellte Brotsirup u.a. als Süßungs- und Geschmacksprecursor in Brot (insbesondere Knäckebrot) und Backwaren, als Substrat für Hefe- und Sauerteige (Schnellreifung), in feinen Backwaren, in Extrudaten (Frühstückscerealien, Trockenflachextrudaten, Snacks etc.), in Süßwaren (z.B. Lakritz), als Backmittel, in Fleisch- und Wurstwaren sowie Milch- und Käseprodukten zur Geschmacksverbesserung, aber auch als Substrat zur Rohwurstreifung, als Substrat für Fermentationen, z.B. Backhefe- oder Alkoholgewinnung, und als Zusatz in Futtermitteln verwendet werden.

Der enzymatische Abbau von Restbrot hat in der Praxis bisher keine Bedeutung erlangen können, weil man glaubte, daß ein hoher Enzymanteil für die Backfähigkeit und damit für den Einsatz des Abbauproduktes auf den meisten oben genannten Anwendungsgebieten schlecht sei, da Enzyme unter Verhinderung der Krumenausbildung zu "Wasserstreifen" führen. Dies hat sich jedoch bezüglich der Erfindung als Fehleinschätzung erwiesen, da die beim erfindungsgemäßen Verfahren erhaltenen Abbauprodukte bei der Verwendung für Backzwecke keine nennenswerten negativen Auswirkungen auf die Backfähigkeit zeigen. Ganz im Gegenteil können sogar Verbesserungen in dieser Beziehung beobachtet werden (z. B. geringerer Hefebedarf und verbesserter Geschmack).

Die Durchführung des erfindungsgemäßen Verfahrens erfolgt im wesentlichen so, wie dies aus dem Stand der Technik für enzymatische Abbauverfahren von Stärke und Proteinen bekannt ist. So können die gleichen Vorrichtungen wie bei der konventionellen Verzuckerung von Stärke mit Enzymen verwendet werden. Hierzu gehören Rührreaktoren (vorzugsweise mit indirekt beheiztem Rührsystem), Dekanter, Separatoren, Verdampfer, Trockner etc. Ein Vorteil des erfindungsgemäßen Verfahrens, der auch in apparativer Hinsicht eine erhebliche Vereinfachung bedeutet, besteht darin, daß auf eine aufwendige Reinigung des erhaltenen Produktes verzichtet werden kann. Das nach der enzymatischen Behandlung im Reaktor anfallende Flüssigmaterial kann beispielsweise direkt der Backmasse zugeführt werden. Man kann das Produkt aber auch zu einem Sirup eindampfen, es weiter zu einem Pulverprodukt trocknen oder es auf einen Träger auftragen (imprägnieren), so daß ein Pulver, Preßlinge etc. erhalten werden.

Die für die Durchführung des erfindungsgemäßen Verfahrens wesentlichen Verfahrensparameter wie Temperatur, pH-Wert und Feststoffkonzentration richten sich selbstverständlich nach der Natur des zu verarbeitenden Restbrotes (wobei gegebenenfalls störende Bestandteile zu berücksichtigen sind) und

3

EP 0 229 979 B1

insbesondere nach der Auswahl der Enzyme. Auf Basis der erfindungsgemäßen Lehre und unter Heranziehung des großen Erfahrungsschatzes aus dem Stande der Technik bezüglich des enzymatischen Abbaus von Stärke und Proteinen stellt es für den Fachmann keine Schwierigkeit dar, mit Hilfe von einigen Versuchen die richtigen Enzyme und die besten Verfahrensbedingungen zu bestimmen. Die folgenden Ausführungen betreffen dementsprechend Ausführungsformen der Erfindung, die aufgrund des jetzigen Kenntnisstandes bevorzugt sind.

Für den enzymatischen Abbau der im Restbrot vorhandenen Stärke wird erfindungsgemäß eine saure alpha-Amylase verwendet. Hierbei handelt es sich um im Handel erhältliche Produkte wie z. B. Fungal-alpha-Amylase (aus Schimmelpilzen). Als geeignet haben sich insbesondere Amylasen mit einem optimalen pH-Bereich von 4,3 bis 6,6, vorzugsweise 4,8 bis 5,4 und insbesondere 5,0 bis 5,2 erwiesen. Diese Amylasen können bei Raumtemperatur eingesetzt werden, was allerdings zu einem verhältnismäßig großen Zeitaufwand für die Durchführung des erfindungsgemäßen Verfahrens führt. Geeigneter sind deshalb Temperaturen im Bereich des Temperaturoptimums der verwendeten Enzyme, d.h. von 40 bis 110°C, vorzugsweise von 40 bis 70°C und insbesondere Temperaturen im Bereich von 40 bis 50°C. Die Inaktivierung der Amylase kann durch Erwärmen über das jeweilige Optimum oder durch Absenkung des pH-Wertes auf 4,0 und weniger erfolgen.

Für den hydrolytischen Abbau der im Restbrot vorhandenen Proteine werden erfindungsgemäß saure Proteasen eingesetzt, die aus der Fermentation von Weizenkeimen durch Vertreter der Rhizopus-Gruppe gewonnen werden. Die Proteasen weisen einen optimalen pH-Bereich um 3,5 auf.

Ähnlich wie bei der zu verwendenden Amylase kann auch die Protease bei Raumtemperatur eingesetzt werden. Um jedoch den erforderlichen Zeitaufwand zu verringern, empfehlen sich Temperaturen von 30 bis 55°C, vorzugsweise 40 bis 50°C und insbesondere von etwa 45°C.

In einer bevorzugten Ausführungsform der Erfindung erfolgt der enzymatische Abbau der im Restbrot vorhandenen Stärke nicht nur mit alpha-Amylase sondern zusätzlich mit handelsüblicher Amyloglucosidase (siehe oben und vgl. die dort genannte Literatur). Als erfindungsgemäß gut geeignet hat sich beispielsweise mikrobielle Amyloglucosidase erwiesen, die meistens aus Aspergillus niger gewonnen wird. Für dieses Enzym haben sich pH-Bereiche von 3,5 bis 5, vorzugsweise von 3,8 bis 4,5 und insbesondere um 4,0 als geeignet erwiesen. Der Temperaturbereich liegt bei 30 bis 65°C, vorzugsweise 50 bis 65°C und insbesondere 60°C. Alle beim erfindungsgemäßen Verfahren verwendbaren Enzyme sind dem Fachmann bekannt und im Handel erhältlich (siehe z.B. die oben genannte Literatur und Firmenschriften wie die Broschüre V-354-04-0 "Enzymtechnologie" der Firma Röhm GmbH, Darmstadt).

Die Konzentration der zu verwendenden Enzyme richtet sich selbstverständlich nach ihrer Aktivität. Außerdem sind die Kohlehydrat- bzw. Proteingehalte des eingesetzten Restbrotes zu beachten. Da allerdings der Kohlehydratgehalt bei Brot ziemlich konstant bei etwa 45 bis 50 Gew.% liegt (70 bis 80 Gew.% i.T.), kann man grundsätzlich davon ausgehen, daß, bezogen auf den Kohlehydratgehalt i.T., 0,05 bis 2 Gew.% und vorzugsweise etwa 0,1 bis 1 Gew.% alpha-Amylase bei einer Aktivität von ungefähr 40 000 SKBU/ml ± 5% zu guten Ergebnissen führen.

SKBU ist die Aktivität der alpha-Amylase nach der Methode von R.M. Sandstedt, E. Kneen und M.J. Blish (SKB). Eine SKB-Einheit (SKBU) ist jene Enzymmenge, die unter den Bedingungen der Analysenvorschrift 1 g $\beta$-Grenzdextrin in 1 Stunde in ein Dextrin vorgegebener Größe umwandelt (siehe "Methoden der enzymatischen Analyse" von H.U. Bergemeyer).

Die Protease wird, bezogen auf den Proteingehalt i.T. des Restbrotes, in einer Konzentration von 1 bis 3 Gew.%, bei einer Aktivität von 15 000 U/g, eingesetzt. Ein U (Unit) ist die jenige Enzymmenge, die unter Standard-Testbedingungen die Umwandlung von 1 $\mu$Mol Substrat katalysiert. Für den erfindungsgemäß bevorzugten Einsatz von Amyloglucosidase haben sich, bezogen auf die Kohlenhydratfraktion i.T., Konzentrationen von 0,1 bis 2 Gew.%, vorzugsweise 0,1 bis 1 Gew.% und insbesondere 0,2 Gew.% bei einer Aktivität von 200 GAU/ml ± 5% als geeignet erwiesen. GAU (Glucoamylaseunit) steht für die Aktivität der Amyloglucosidase und ist die Enzymmenge, die in 1 Stunde aus löslicher Stärke 1 g Glucose unter definierten Bedingungen freisetzt (zu U und GAU siehe ebenfalls obige Literaturstelle).

Vorzugsweise wird das erfindungsgemäße Verfahren so durchgeführt, daß das Restbrot soweit erforderlich zunächst vermahlen wird. Die Teilchengröße des Brotes nach diesem Mahlvorgang beträgt in der Regel etwa 2 mm; sie ist jedoch nicht kritisch und kann in Abhängigkeit von der Beschaffenheit des Restbrotes und den Verfahrensbedingungen auch sehr viel größer oder auch erheblich kleiner sein.

In dem Reaktor, in dem das erfindungsgemäße Verfahren durchgeführt werden soll, wird Wasser (z.B. Leitungswasser) vorgelegt und auf die gewünschte Temperatur erwärmt. Die Wassermenge richtet sich nach der Menge und dem Feuchtigkeitsgehalt des zu behandelnden Restbrotes. Im allgemeinen wird ein Flottenverhältnis, d.h. ein Verhältnis von Feststoffen zu Wasser, von 1:1 bis 1:2,5, vorzugsweise etwa 1:1,6 angestrebt. Wichtig ist in jedem Fall, daß eine gut rührbare Reaktionsmischung erhalten wird.

4

Zu dem temperierten Wasser werden dann die Enzyme, alpha-Amylase und Protease, in der gewünschten Menge zudosiert. Anschließend erfolgt die Zugabe des vermahlenen Restbrotes, wobei eine sukzessive Zugabe aus Gründen der Einhaltung einer optimalen Viskosität häufig vorteilhaft ist. Bei einem Ansatz aus 1 Tonne Feststoff und 1 Tonne Wasser erstreckt sich die sukzessive Zugabe des gemahlenen Restbrotes beispielsweise über einen Zeitraum von etwa 1 Stunde bzw. meistens 30 bis 45 Minuten. Bei der Zugabe des vermahlenen Restbrotes und auch im weiteren Verlauf des erfindungsgemäßen Verfahrens wird ständig gerührt.

Nach Abschluß der Zugabe des Restbrotes wird das Rühren des Reaktionsgemisches für weitere 4 bis 96 Stunden, üblicherweise 8 bis 24 Stunden und vorzugsweise 6 bis 12 Stunden fortgesetzt. Wie oben bereits erwähnt, kann das nach dieser Zeit erhaltene pumpfähige Endprodukt unmittelbar als Süßungsmittel, Gärsubstrat, Bräunungsmittel oder Geschmacksprecursor Anwendung finden. Alternativ kann dieses Endprodukt nach Belieben eingeengt und zu den bereits oben genannten Produkten verarbeitet werden. Unter Umständen kann es empfehlenswert sein, das Reaktionsgemisch vor Abschluß der Umsetzung in an sich bekannter Weise auf höhere Temperaturen, z. B. etwa 70 °C oder mehr zu erwärmen oder, falls dies im Hinblick auf die vorgesehene Verwendung möglich ist, den pH-Wert mit Genußsäuren wie z.B. Milchsäure und/oder Essigsäure auf 4,0 oder weniger zu erniedrigen, um die Enzyme zu inaktivieren und um im Falle der pH-Werterniedrigung gleichzeitig ein Teigsäuerungsmittel zu erhalten. Auf diese Weise wird verhindert, daß die Enzyme bei der Verwendung des erfindungsgemäß hergestellten Produktes irgendeinen negativen Einfluß ausüben. In einigen Fällen kann es allerdings geradezu erwünscht sein, daß die eingesetzten Enzyme zumindest teilweise aktiv bleiben, da sich dann im Laufe der weiteren Verarbeitung Vorteile ergeben. Dies ist beispielsweise der Fall, wenn das erfindungsgemäß hergestellte Produkt bei der Verarbeitung von glutenreichen Weizenmehlen eingesetzt wird. Durch die Proteaseaktivität kommt es zu einer Teigerweichung und damit verbunden zu Teigen, die leichter geknetet und mechanisch bearbeitet werden können. Außerdem ergeben sich auch Vorteile beim Formen und Ausrollen der Teige, die Gärung verläuft schneller und das Volumen wird größer. Der Teig schmiegt sich besser in die Backform ein, die Form des Weizenbrotes ist gleichmäßiger, und die Krumenstruktur ist verbessert.

In einer bevorzugten Ausführungsform der Erfindung werden die Verfahrensparameter der Hydrolyse nach einer gewissen Zeit, vorzugsweise nach etwa 8 Stunden neu eingestellt. Der pH-Wert wird mit Genußsäuren, vorzugsweise Milch- und/oder Essigsäure auf 4,5 und die Hydrolysetemperatur auf 60 °C eingestellt. Anschließend wird die Amyloglucosidase in der oben genannten Konzentration zugesetzt. Durch die zusätzliche Verwendung von Amyloglucosidase wird eine stärkere Verzuckerung des Stärkeanteils im Restbrot erzielt. Dementsprechend wird die weitere Hydrolyse nach Zusatz der Amyloglucosidase so lange fortgesetzt, bis der gewünschte Hydrolysegrad und damit der gewünschte DE-Wert (DE = Dextrose-Äquivalent) erreicht sind.

Es ist für den Fachmann ohne weiteres ersichtlich, daß die im Zusammenhang mit der oben beschriebenen Verfahrensdurchführung angegebenen Parameter je nach den Umständen verändert werden können bzw. aufeinander abgestimmt werden müssen. So richtet sich beispielsweise die Umsetzungsdauer ganz wesentlich nach der gewählten Temperatur und dem gewählten pH-Wert, da diese beiden Parameter die Effektivität der eingesetzten Enzyme bestimmen. Ferner ergibt sich aus der obigen Beschreibung für den Fachmann ohne weitereres, daß die Wahl des pH-Wertes und der Temperatur in der Regel insofern einen Kompromiß darstellt, als die optimalen pH-Werte und Temperaturen für die Amylase und die Protease voneinander abweichen. Es ist deshalb in den meisten Fällen nicht zu vermeiden, daß Verfahrensbedingungen gewählt werden müssen, bei denen weder die Amylase noch die Protease ihre maximale Aktivität entfalten. Dies ist aber nicht von ausschlaggebender Bedeutung, da sich gezeigt hat, daß auch bei Reaktionsbedingungen, die von den optimalen Bedingungen abweichen, immer noch ausreichende Enzymaktivitäten erreicht werden.

Aus der dem erfindungsgemäßen Verfahren zugrundeliegenden Reaktion resultieren im Prinzip reduzierende Zucker (Monomere, Oligomere, Polymere) und freie Aminosäuren, aber auch Peptide und Proteine, in einem bei konstanten Verfahrensbedingungen charakteristischen finger print. Gerade dieses Nebeneinandervorliegen von Stärke- und Proteinabbauprodukten erhöht den Wert des beim erfindungsgemäßen Verfahren gewonnenen Produktes außerordentlich, weil sich dieses Produkt dadurch als Geschmacksprecursor verwenden läßt und beim Backprozeß zu einem typischen Brotgeschmack- und Aromaprofil führt.

Beispiel 1

Ein Brotgemisch mit einem Trockensubstanzgehalt von 80,4 Gew.% und einem Feuchtigkeitsgehalt von 19,6 Gew.%, welches 65,3 Gew.% (entsprechend 81,3 Gew.% i T.) Kohlehydrate und 9,1 Gew.% (entsprechend 11,4 Gew.% i.T.) Protein enthielt, wurde auf eine Teilchengröße von etwa 2 mm vermahlen.

5

In einem mit Rührer und Thermometer ausgestatteten Reaktionsgefäß wurden dann 30,4 kg Leitungswasser auf 45°C erwärmt. Diese Temperatur entspricht der Reaktionstemperatur und wurde während der Hydrolyse beibehalten. Es wurden 327 g alpha-Amylase (1,0 Gew.% bezogen auf Kohlehydrate i.T.) und 137 g Protease (entsprechend 3,0 Gew.% bezogen auf Protein i.T.) zu dem Wasser gegeben. Bei der alpha-Amylase und der Protease handelte es sich um handelsübliche Enzyme fungalen Ursprungs, wobei das pH-Optimum der Amylase bei 4,8 bis 5,4 und das Temperaturoptimum bei 45 bis 55°C lag. Das pH-Optimum der Protease lag bei 3,0 bis 4,0 und das Temperaturoptimum bei 40°C.

Die Enzyme wurden dem temperierten Ansatzwasser zugefügt, damit die verflüssigende Wirkung der Enzyme beim Zusatz der vermahlenen Brotmischung sofort einsetzte und somit eine allzu hohe Viskosität verhindert wurde.

Die vermahlene Brotmischung wurde dann sukzessive zu dem temperierten, die Enzyme enthaltenden Ansatzwasser gegeben. Die Zugabe war nach 55 Minuten beendet. Das Brotgemisch hatte einen pH-Wert von 4,8, so daß eine pH-Einstellung nicht notwendig war. Eine Pufferung erfolgte nicht, da sich der pH-Wert während der Reaktionszeit nicht signifikant änderte.

Die Versuchszeit betrug 24 Stunden. In bestimmten Zeitabständen wurden der pH-Wert, der Gehalt an reduzierendem Zucker und der Gehalt an freien Aminosäuren bestimmt. Die Bestimmung des Gehaltes an reduzierendem Zucker erfolgte nach Luff-Schoorl, berechnet als Glucose. Der Gehalt an freien Aminosäuren wurde errechnet aus den Ergebnissen der Formoltitration zum Nachweis von alpha-Aminostickstoff. Die Ergebnisse sind in der folgenden Tabelle zusammengestellt.

## Tabelle 1

| Zeit (h) | pH-Wert | % reduz. Zucker i.T. | % freier $\alpha$-Aminostickstoff i.T. |
|---|---|---|---|
| 2 | 4,8 | 20,58 | 1,63 |
| 4 | 4,75 | 34,88 | 3,79 |
| 6 | 4,75 | 41,51 | - |
| 8 | 4,74 | 43,1 | 4,78 |
| 24 | 4,73 | 49,3 | 6,1 |

Der in der obigen Tabelle angegebene Wert für die nach 24 Stunden erreichte Konzentration an freiem Aminostickstoff entsprach einer Hydrolyse von 53,5% des eingesetzten Proteins zu freien Aminosäuren.

Das so hergestellte Produkt wurde bei Backversuchen eingesetzt. Dabei ergab sich, daß die in dem Produkt vorhandenen Enzyme keine Auswirkungen auf das Backverhalten hatten. In den hergestellten Broten war keine Ausbildung eines Wasserstreifens erkennbar. Auch ein Abbacken der Kruste war bei keinem der Brote festzustellen. Die Verwendung des nach diesem Beispiel erhaltenen Brotsirups führte nicht nur zu einer Hefeeinsparung sondern darüber hinaus zu einer Geschmacksverbesserung, was ganz besonders bei Weizengebäck aufgrund fehlender anderer geschmacklicher Einflüsse zu beobachten war.

Das erhaltene Produkt wurde ferner bei der Herstellung von Trockenflachextrudaten verwendet. Sein Einsatz erwies sich als technisch unproblematisch, und es wurden Trockenflachextrudate mit deutlich verbessertem Geschmack erhalten.

Beispiel 2

Mit 80 kg einer anderen vermahlenen Brotmischung wurde der Versuch gemäß Beispiel 1 wiederholt mit dem Unterschied, daß die relative Menge der eingesetzten alpha-Amylase um 90% und die relative Menge der Protease um 50% reduziert wurden. Ferner wurde nach 8-stündiger Hydrolyse der Reaktionsmischung Amyloglucosidase (vgl. die oben als bevorzugt genannte Amyloglucosidase) in einer Menge von 82 g zugesetzt. Die Hydrolyse wurde dann weitere 64 Stunden bei einem pH-Wert von 4,9 und einer Reaktionstemperatur von 60°C fortgesetzt. Das auf diese Weise erhaltene Produkt wurde ebenfalls erfolgreich in Back- und Extrusionsversuchen eingesetzt.

Die Einsatzmöglichkeiten der nach dem erfindungsgemäßen Verfahren hergestellten Produkte bestimmen sich im wesentlichen nach deren Inhaltsstoffen. Der Anteil an reduzierendem Zucker kann beispielsweise den Zucker in einer Backrezeptur zum Teil ersetzen. Die Bildung von Geschmacks- und Aromastoffen durch die Melanoidin-Bildung und andere Umsetzungen ist erwünscht und hat insbesondere bei Weizengebäck eine ausgeprägte Geschmacksverbesserung zur Folge. Die Inhaltsstoffe der in den Beispielen 1 und 2 erhaltenen Produkte sind in der folgenden Tabelle zusammengestellt.

## Tabelle 2

| Inhaltsstoff in 1000 g | Beispiel 1 | Beispiel 2 |
|---|---|---|
| $H_2O$ (ml) | 380 | 460 |
| Trockensubstanz (g) | 620 | 540 |
| Glucose (g) i.T. | 305,6 | 338 |
| Stärke (g) i. T. | 197,8 | 102,1 |
| Protein (g) i. T. | 31,86 | 31,33 |
| freie Aminosäure (g) i. T. | 38,2 | 29,15 |

Als Dichte des Wassers wurde 1,0 angenommen. i.T bedeutet in Trockensubstanz. Außerdem ist bei der Beurteilung der in der Tabelle angegebenen Werte zu beachten, daß in den Beispielen 1 und 2 unterschiedliche Brotgemische zum Einsatz gekommen sind.

## Patentansprüche

1. Verfahren zum enzymatischen Abbau von Restbrot mit Hilfe von sauren alpha-Amylasen, Proteasen und gegebenenfalls Amyloglucosidasen, bei dem man die Amylasen und die Proteasen gleichzeitig auf das Restbrot einwirken läßt, **dadurch gekennzeichnet,** daß man eine saure Protease mit einem pH-Optimum bei 3,5 und bei einer Aktivität von 15.000 U/g, gewonnen aus der Fermentation von Weizenkeimen durch Vertreter der Rhizopus-Gruppe, in einer Menge von 1 bis 3 Gew. %, bezogen auf den Proteingehalt der Restbrot-Trockenmasse, verwendet.

2. Verfahren nach Anspruch 1, dadurch gekennzeichnet, daß man für den enzymatischen Abbau der Stärke zunächst alpha-Amylase und zu einem späteren Zeitpunkt zusätzlich Amyloglucosidase einsetzt.

3. Verwendung des nach dem Verfahren gemäß einem der Ansprüche 1 und 2 gewonnenen Abbauprodukts bei der Herstellung von Back-, Fleisch- und Wurstwaren, Extruderprodukten, Milch- und Käseprodukten sowie Futtermitteln und als Substrat für Fermentationen.

## Claims

1. Process for the enzymatic degradation of bread remainders with the aid of acid alpha-amylases, proteases and optionally amyloglucosidases, whereby the amylases and the proteases are allowed to act simultaneously on the bread remainders, **characterized in that** an acid protease with a pH optimum at 3.5 and at an activity of 15,000 U/g, obtained from the fermentation of wheat germs by agents of the Rhizopus group, in a quantity of 1 to 3 wt-%, relative to the protein content of the dry mass of bread remainders, is used.

2. Process according to claim 1, characterized in that for the enzymatic degradation of the starch firstly alpha-amylase and at a later point, additionally amyloglucosidase is used.

3. Use of the degradation product obtained using the process according to one of claims 1 and 2 for the production of baking, meat and sausage goods, extrusion products, milk and cheese products and also animal feed and as substrate for fermentations.

**Revendications**

1. Procédé de dégradation enzymatique de restes de pain à l'aide d'alpha-amylases, protéases et éventuellement amyloglucosidases acides, dans lequel on laisse agir les amylases et les protéases simultanément sur les restes de pain, caractérisé en ce que l'on utilise une protéase acide avec une activité optimale à un pH de l'ordre de 3,5 et avec une activité de 15.000 unités/g, obtenue par fermentation de germes de blé à l'aide d'un représentant du groupe Rhizopus, en une quantité de 1 à 3% en poids par rapport à la teneur en protéines de la masse sèche des restes de pain.

2. Procédé selon la revendication 1, caractérisé en ce que l'on utilise pour la dégradation enzymatique de l'amidon d'abord une alpha-amylase et à un stade ultérieur en plus une amyloglucosidase.

3. Utilisation du produit de dégradation obtenu selon le procédé de l'une quelconque des revendications 1 ou 2, pour la fabrication de produits de boulangerie, de boucherie et de charcuterie, de produits d'extrusion, produits laitiers et fromagers ainsi que dans les aliments pour bétail et comme substrat pour des fermentations.